# EUROPEAN PATENT APPLICATION

(11) **EP 4 456 637 A1**
(43) Date of publication of application: **30.10.2024**
(21) Application number: 22923630.2
(22) Date of filing: 28.12.2022
(51) Int. Cl.: H04W 72/04

(54) **TIME-FREQUENCY RESOURCE ALLOCATION METHOD AND RELATED DEVICE**

(30) Priority: 26.01.2022 CN 202210096407
(71) Applicant: Huawei Technologies Co., Ltd., Shenzhen, Guangdong 518129 (CN)
(72) Inventor: GAN, Shuang, Shenzhen, Guangdong 518129 (CN); CHEN, Jindou, Shenzhen, Guangdong 518129 (CN); LI, Miao, Shenzhen, Guangdong 518129 (CN)
(74) Representative: Körber, Martin Hans
(86) International application number: PCT/CN2022/142742
(87) International publication number: WO 2023/142845

(57) **Abstract**

Embodiments of this application disclose a time-frequency resource allocation method and a related device. The method in embodiments of this application includes: First, an AP obtains first status information of a first STA associated with the AP, where the first status information includes that the first STA enters a sleep state; then, the AP sends a first message to an access management device, where the first message indicates that the first STA enters the sleep state; and further, the access management device updates, based on the first message, locally maintained status information of the first STA, and performs time-frequency resource scheduling to allocate a first time-frequency resource to a STA in a wake-up state. In the foregoing manner, even if there is data to be transmitted between a first AP and the first STA, the first AP does not occupy a time-frequency resource to exchange data with the first STA that enters the sleep state. This avoids a waste of the time-frequency resource.

## Description

This application claims priority to Chinese Patent Application No. 202210096407.3, filed with the China National Intellectual Property Administration on January 26, 2022 and entitled "TIME-FREQUENCY RESOURCE ALLOCATION METHOD AND RELATED DEVICE", which is incorporated herein by reference in its entirety.

### TECHNICAL FIELD

This application relates to the communication field, and in particular, to a time-frequency resource allocation method and a related device.

### BACKGROUND

Fiber to the room (fiber to the room, FTTR) is a new home network access architecture. Optical fibers are routed from a signal box to each room. Optical modems are connected to optical gateways through the optical fibers in each room and provide reliable wireless access points (access points, APs) for users, enabling wireless signals to cover every corner in a home scenario. With continuous evolution of the FTTR architecture, a two-layer centralized scheduling architecture is proposed, where in the architecture, the optical gateway controls the optical modem to allocate a downlink time-frequency resource and perform station (station, STA) uplink access management and control. The optical gateway delivers instructions to the optical modem based on air interface information, buffered information, and a service type that are reported by the optical modem, to allocate a time-frequency resource to a STA.

In addition, an energy-saving status of the STA is independently maintained and updated by the optical modem. It is assumed that the optical modem buffers downlink data corresponding to a STA in a sleep state. After the optical modem reports the buffered information and the service type to the optical gateway, the optical gateway considers that the time-frequency resource may be allocated to the STA and sends a scheduling decision to the optical modem. However, because the STA is in the sleep state, the STA does not receive data sent by the optical modem, causing a waste of the time-frequency resource.

### SUMMARY

This application provides a time-frequency resource allocation method and a related device, to avoid a waste of a time-frequency resource.

According to a first aspect, this application provides a time-frequency resource allocation method. The method is performed by an access management device. First, the access management device receives a first message sent by a first AP, where the first message indicates that a first STA associated with the first AP enters a sleep state. Further, the access management device determines, based on the first message, that the first STA is in the sleep state, and performs time-frequency resource scheduling, to allocate a first time-frequency resource to a STA in a wake-up state.

In this implementation, the first AP may learn whether the first STA is in the wake-up state or the sleep state. If the first STA enters the sleep state from the wake-up state, the first AP sends a message to the access management device to notify that the first STA enters the sleep state. The access management device does not allocate a time-frequency resource to the first STA. In this way, even if there is data to be transmitted between the first AP and the first STA, the first AP does not occupy the time-frequency resource to exchange data with the first STA that enters the sleep state. This avoids a waste of the time-frequency resource.

In some possible implementations, a second STA associated with the first AP is in the wake-up state, and that the access management device allocates the first time-frequency resource to the STA in the wake-up state includes: The access management device sends a first scheduling message to the first AP, where the first scheduling message indicates the first AP to perform data exchange with the second STA in the wake-up state by using the first time-frequency resource. In this implementation, a specific implementation of allocating the time-frequency resource by the access management device is provided. This enhances practicability of this solution.

In some possible implementations, the access management device is associated with a second AP, the second STA associated with the second AP is in the wake-up state, and that the access management device allocates the first time-frequency resource to the STA in the wake-up state includes: The access management device sends a first scheduling message to the second AP, where the first scheduling message indicates the second AP to perform data exchange with the second STA in the wake-up state by using the first time-frequency resource. In this implementation, another specific implementation of allocating the time-frequency resource by the access management device is provided. If all STAs, including the first STA, that are associated with the first AP enter the sleep state, the first AP temporarily does not participate in resource scheduling, and the access management device allocates the first time-frequency resource to the second STA associated with the second AP. This improves flexibility of this solution.

In some possible implementations, the first message includes a first message type, an identifier of the first AP, and an identifier of the first STA. In this implementation, content carried in the first message is described, so that the access management device formulates a scheduling policy based on the first message.

In some possible implementations, the first message is an optical network unit management and control interface (ONU management and control interface, OMCI) message, the first message includes a first message type field and a first message content field, the first message type field indicates the first message type, and the first message content field indicates the identifier of the first AP and the identifier of the first STA. In this implementation, the first message may use an OMCI message format defined in an existing standard, so that this solution is implemented in a standardized manner.

In some possible implementations, the first message is an Ethernet frame, the first message includes a first type/length field and a first payload field, the first type/length field indicates the first message type, and the first payload field indicates the identifier of the first AP and the identifier of the first STA. In this implementation, the first message may be carried by using an Ethernet frame format defined in the existing standard, so that this solution is implemented in the standardized manner, and scalability of this solution is improved.

In some possible implementations, the method further includes: The access management device receives a second message sent by the first AP, where the second message indicates that the first STA enters the wake-up state; and the access management device determines, based on the second message, that the first STA is in the wake-up state, and sends a second scheduling message to the first AP, where the second scheduling message indicates the first AP to perform data exchange with the first STA in the wake-up state by using a second time-frequency resource. In this implementation, if the first STA switches from the sleep state to the wake-up state again, the first AP also notifies the access management device, so that the access management device re-allocates a time-frequency resource to the first STA, to ensure that the first AP can normally perform data exchange with the first STA.

In some possible implementations, the second message includes a size of data to be transmitted between the first AP and the first STA and a traffic identification (Traffic Identification, TID), so that the access management device allocates the time-frequency resource to the first STA more properly based on an actual requirement.

In some possible implementations, before the access management device receives the first message sent by the first AP, the first time-frequency resource is pre-allocated by the access management device to the first STA. In this implementation, a specific application scenario is provided. When the first STA is in the wake-up state, the access management device may pre-allocate the first time-frequency resource to the first STA. A pre-allocation operation may be understood as a local scheduling decision of the access management device, and the first time-frequency resource is not necessarily actually pre-allocated to the first STA through scheduling. After the first STA switches to the sleep state, the access management device readjusts the scheduling decision, to allocate the first time-frequency resource to another STA in the wake-up state. This ensures that the first time-frequency resource can be effectively used.

In some possible implementations, the access management device is an optical gateway, and the first AP is an optical modem; or the access management device is an optical line terminal (optical line terminal, OLT), and the first AP is an optical network unit (optical network unit, ONU). In this implementation, this solution is applied to an optical access scenario, and may be specifically an FTTR scenario, to implement Wi-Fi coverage of a home network, and implement proper allocation of the time-frequency resource in the scenario.

In some possible implementations, this solution is applied to a copper access scenario, the access management device is an access controller (access controller, AC), and the AC is connected to the AP by using a copper line. This extends a scenario to which this solution is applicable.

According to a second aspect, this application provides a time-frequency resource allocation method. The method is performed by an AP. First, the AP obtains first status information of a first STA associated with the AP, where the first status information includes that the first STA enters a sleep state. Further, the AP sends a first message to an access management device, where the first message indicates that the first STA enters the sleep state, so that the access management device determines that the first STA is in the sleep state, and allocates a first time-frequency resource to a STA in a wake-up state.

In some possible implementations, a second STA associated with the AP is in the wake-up state, and the method further includes: The AP receives a first scheduling message sent by the access management device; and the AP performs data exchange with the second STA in the wake-up state by using the first time-frequency resource indicated by the first scheduling message.

In some possible implementations, the first message includes a first message type, an identifier of a first AP, and an identifier of the first STA.

In some possible implementations, the first message is an OMCI message, the first message includes a first message type field and a first message content field, the first message type field indicates the first message type, and the first message content field indicates an identifier of the AP and the identifier of the first STA.

In some possible implementations, the first message is an Ethernet frame, the first message includes a first type/length field and a first payload field, the first type/length field indicates the first message type, and the first payload field indicates an identifier of the AP and the identifier of the first STA.

In some possible implementations, an updated first status information includes that the first STA enters the wake-up state, and the method further includes: The AP sends a second message to the access management device, where the second message indicates that the first STA enters the wake-up state; the AP receives a second scheduling message sent by the access management device; and the AP performs data exchange with the first STA in the wake-up state by using a second time-frequency resource indicated by the second scheduling message.

In some possible implementations, the second message includes a size of data to be transmitted between the AP and the first STA and a TID.

In some possible implementations, before the AP obtains the first status information of the first STA, the first time-frequency resource is pre-allocated by the access management device to the first STA.

In some possible implementations, the access management device is an optical gateway, and the AP is an optical modem; or the access management device is an OLT, and the AP is an ONU.

In some possible implementations, the access management device is an AC.

According to a third aspect, this application provides an access management device, including a transceiver unit and a processing unit. The transceiver unit is configured to receive a first message sent by a first access point AP, where the first message indicates that a first STA associated with the first AP enters a sleep state. The processing unit is configured to: determine, based on the first message, that the first STA is in the sleep state, and allocate a first time-frequency resource to a STA in a wake-up state.

In some possible implementations, a second STA associated with the first AP is in the wake-up state. The processing unit is specifically configured to control the transceiver unit to send a first scheduling message to the first AP, where the first scheduling message indicates the first AP to perform data exchange with the second STA in the wake-up state by using the first time-frequency resource.

According to a fourth aspect, this application provides an AP, including a transceiver unit and a processing unit. The processing unit is configured to obtain first status information of a first station STA associated with the AP, where the first status information includes that the first STA enters a sleep state. The transceiver unit is configured to send a first message to an access management device, where the first message indicates that the first STA enters the sleep state, so that the access management device determines that the first STA is in the sleep state, and allocates a first time-frequency resource to a STA in a wake-up state.

In some possible implementations, a second STA associated with the AP is in the wake-up state. The transceiver unit is specifically configured to receive a first scheduling message sent by the access management device. The processing unit is specifically configured to perform data exchange with the second STA in the wake-up state by using the first time-frequency resource indicated by the first scheduling message.

According to a fifth aspect, this application provides an access management device, including a processor, a memory, and a transceiver. The processor, the memory, and the transceiver are connected to each other by using a line, and the processor invokes program code in the memory to perform the method shown in any implementation of the first aspect.

According to a sixth aspect, this application provides an AP, including a processor, a memory, and a transceiver. The processor, the memory, and the transceiver are connected to each other by using a line, and the processor invokes program code in the memory to perform the method shown in any implementation of the second aspect.

According to a seventh aspect, this application provides a computer-readable storage medium. The computer-readable storage medium stores a computer program. When the computer program is executed by hardware, a part or all of steps of any method performed by the access management device in the first aspect can be implemented.

According to an eighth aspect, this application provides a computer-readable storage medium. The computer-readable storage medium stores a computer program. When the computer program is executed by hardware, a part or all of steps of any method performed by the AP in the second aspect can be implemented.

In embodiments of this application, the first AP may learn whether the first STA is in the wake-up state or the sleep state. If the first STA enters the sleep state from the wake-up state, the first AP sends a message to the access management device to notify that the first STA enters the sleep state. Further, the access management device performs time-frequency resource scheduling based on the message reported by the first AP, to allocate the time-frequency resource to the STA in the wake-up state. In this way, even if there is data to be transmitted between the first AP and the first STA, the first AP does not occupy the time-frequency resource to exchange data with the first STA that enters the sleep state. This avoids the waste of the time-frequency resource.

### BRIEF DESCRIPTION OF DRAWINGS

FIG. 1 is a schematic diagram of a system architecture of FTTH;
FIG. 2 is a schematic diagram of a system architecture of FTTR;
FIG. 3 is a schematic diagram of a first embodiment of a time-frequency resource allocation method according to this application;
FIG. 4 is a schematic diagram of a first frame structure of a first message according to this application;
FIG. 5 is a schematic diagram of a second frame structure of a first message according to this application;
FIG. 6 is a schematic diagram of a third frame structure of a first message according to this application;
FIG. 7 is a schematic diagram of content of status information of an AP according to this application;
FIG. 8 is a schematic diagram of a second embodiment of a time-frequency resource allocation method according to this application;
FIG. 9 is a schematic diagram of a structure of a possible access management device;
FIG. 10 is a schematic diagram of a structure of another possible access management device;
FIG. 11 is a schematic diagram of a structure of a possible AP; and
FIG. 12 is a schematic diagram of a structure of another possible AP.

### DESCRIPTION OF EMBODIMENTS

This application provides a time-frequency resource allocation method and a related device, to avoid a waste of a time-frequency resource. It should be noted that in the specification, claims, and accompanying drawings of this application, the terms "first", "second", and the like are intended to distinguish between similar objects but do not necessarily indicate a specific order or sequence. It should be understood that the foregoing terms may be interchangeable in proper circumstances so that the embodiments described in this application can be implemented in other orders than the order described herein. Moreover, the terms "include", "have", or any other variant thereof are intended to cover non-exclusive inclusion. For example, processes, methods, systems, products, or devices that include a series of steps or units are not limited to the steps or the units that are clearly listed, and may include other steps and units that are not clearly listed or that are inherent for the processes, methods, products, or devices.

A passive optical network (passive optical network, PON) is an implementation technology of an optical access network, and the PON is an optical access technology of point-to-multipoint transmission. A current PON system is mainly used in a fiber to the home (fiber to the home, FTTH) scenario. Each home user has only one optical network unit (optical network unit, ONU).

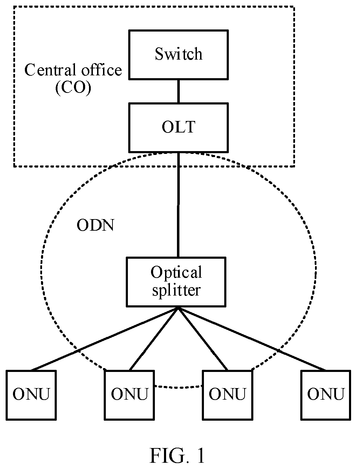

FIG. 1 is a schematic diagram of a system architecture of FTTH. An optical line terminal (optical line terminal, OLT) is connected to upper-layer network-side devices (such as switches and routers), and is connected to one or more lower-layer optical distribution networks (optical distribution networks, ODNs). The ODN includes a passive optical splitter used for optical power distribution, a feeder fiber connected between the passive optical splitter and the OLT, and a branch fiber connected between the passive optical splitter and the ONU. During downlink data transmission, the ODN transmits downlink data of the OLT to each ONU by using the optical splitter, and the ONU selectively receives downlink data that carries an identifier of the ONU. During uplink data transmission, the ODN combines N channels of optical signals sent by the ONU into one channel of optical signal and transmits the optical signal to the OLT. The ONU provides a user side interface for an OAN and is connected to the ODN. If the ONU further provides a user port function, for example, the ONU provides an Ethernet user port or a plain old telephone service (plain old telephone service, POTS) user port, the ONU is referred to as an optical network terminal (optical network termination, ONT).

On the basis of FTTH, optical fibers can be further extended to residential rooms to solve a Wi-Fi coverage problem of home networks. The ONU is installed inside the room, so that a distance between a user terminal and the ONU is reduced, and signal quality is improved. This application scenario is referred to as fiber to the room (fiber to the room, FTTR).

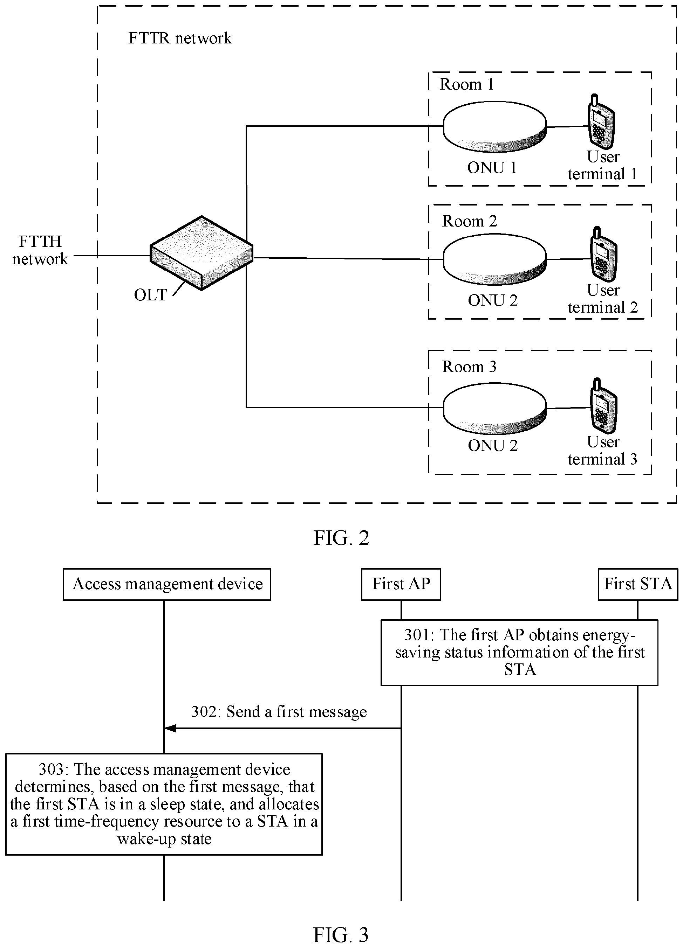

FIG. 2 is a schematic diagram of a system architecture of FTTR. An FTTR network and an FTTH network can be considered as a two-level PON system. In the first-level PON system (FTTH), the OLT is deployed in a central office, and the ONU is deployed in an information box of a home. In the second-level PON system (FTTR), the OLT may be deployed in the information box of the home in place of the ONU in the FTTH. The OLT, in the FTTR scenario, has a function similar to that of the OLT in the FTTH scenario. In addition, the OLT may also have a function similar to that of the ONU in the FTTH scenario. In other words, the OLT in the FTTR may be used as a network device that plays a pivotal role in connecting the FTTH and the FTTR. An ONU in the FTTR may be deployed in each room of the home, and is configured to connect to the user terminal. The ONU and the ONU in the FTTH are essentially a same type of network device. A difference lies in that the ONU in the FTTH is generally deployed in the information box, and an access point (access point, AP) is usually disposed between the user terminal and the ONU. In addition, in the FTTR, the ONU enters each room, and the ONU further has a function of the AP, and may directly perform Wi-Fi connection with the user terminal.

It should be understood that, in the FTTR, the OLT may implement unified management and configuration of all ONUs. For example, the OLT may allocate uplink and downlink time-frequency resources to a user terminal associated with the ONU, to implement data exchange between the ONU and the user terminal. It should be noted that in the FTTR, the OLT may also be referred to as an "optical gateway", and the ONU may also be referred to as an "optical modem" or an "edge ONU". A specific name is not limited in this application.

It should be further understood that, in addition to the foregoing described optical access scenario, the time-frequency resource allocation method provided in this application may be further applied to a copper access scenario. For example, an access controller (access controller, AC) is used for replacing the foregoing OLT, the AC is connected to all APs by using a copper line, and the AC performs unified management and configuration on all the APs.

For ease of description, the OLT, optical gateway, and AC are referred to as "access management devices", the ONU and optical modem are referred to as "APs", and the user terminal associated with the AP is referred to as "a station (station, STA)".

FIG. 3 is a schematic diagram of a first embodiment of a time-frequency resource allocation method according to this application. In this example, the time-frequency resource allocation method includes the following steps.

301: A first AP obtains energy-saving status information of a first STA.

In this embodiment, the first AP is associated with the first STA, and the first AP locally stores the energy-saving status information of the first STA, where the energy-saving status information reflects that the first STA is in a wake-up state or a sleep state. When an energy-saving status of the first STA changes, the first STA notifies the first AP, so that the first AP updates the locally stored energy-saving status information of the first STA. In this embodiment, the energy-saving status information of the first STA is that the first STA enters the sleep state. It should be noted that many energy-saving interaction mechanisms between the AP and the STA are defined in a current standard, for example, a fast power saving (fast power saveing) mechanism is defined in an 802.11 protocol. A specific implementation in which the first AP obtains the energy-saving status information of the first STA is not limited in this application.

302: The first AP sends a first message to an access management device.

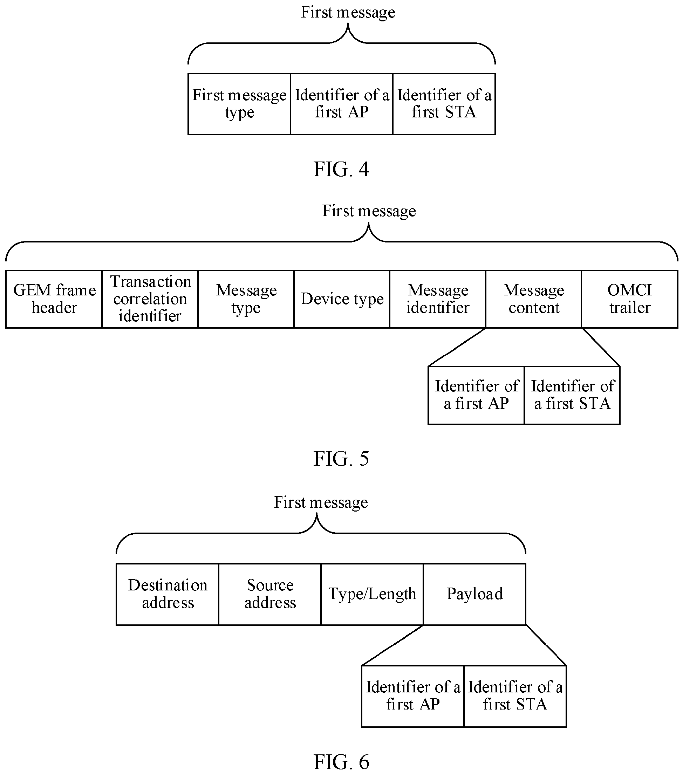

The first message sent by the first AP to the access management device indicates that the first STA associated with the first AP enters the sleep state. FIG. 4 is a schematic diagram of a first frame structure of a first message according to this application. As shown in FIG. 4, the first message includes a first message type, an identifier of the first AP, and an identifier of the first STA. The access management device may learn, based on the first message type, that the first message reflects an energy-saving status of a STA, and learn, based on the identifier of the first AP and the identifier of the first STA, that the first message reflects the energy-saving status of the first STA associated with the first AP. In an implementation, the first message type may be used as an independent field to directly indicate that the STA enters the sleep state. In another implementation, the first message type is used as the independent field only to indicate a type of the first message, and on this basis, the first message type, along with another specified field in the first message, indicates that the STA enters the sleep state. For example, the specified field includes one bit. If the bit is 0, it indicates the wake-up state; or if the bit is 1, it indicates the sleep state. It should be understood that, in addition to the content described above, the first message may further include other content such as a message identifier. This is not specifically limited herein.

It should be noted that the foregoing first message may use a newly defined message structure, or may use a message structure defined in an existing standard. The following describes, with reference to examples, several implementations in which the message structure in the existing standard is used for the first message.

Implementation 1: The first message is an optical network unit management and control interface (ONU management and control interface, OMCI) message.

FIG. 5 is a schematic diagram of a second frame structure of a first message according to this application. As shown in FIG. 5, an OMCI message encapsulated by using a gigabit passive optical network encapsulation method (gigabit passive optical network encapsulation method, GPON) includes: a GEM frame header (GPON encapsulation method header, GEM header), where the GEM frame header indicates start of a frame; a transaction correlation identifier (transaction correlation identifier), where the transaction correlation identifier is a group of messages that correspond to requests and responses; a message type (message type), where the message type is used for defining the message type; a device type (device identifier), where 0xA indicates a Baseline type, and 0xB indicates an Extend type; a message identifier (message identifier), where a size of the message identifier is four bytes, two bytes are entity IDs, and two bytes are instance IDs; message content (message content), where the message content indicates a frame payload; and an OMCI trailer (OMCI trailer), where the OMCI trailer is mainly used for filling in check code. In this implementation, a message type field indicates the first message type. In this application, a new message type may be added to message types already defined in the existing standard, so that the AP reports the energy-saving status of the STA to the access management device. In an example, the message type field may be set to 0x1d. In addition, a message content field is also defined, and the identifier of the first AP and the identifier of the first STA may be indicated by the message content field.

Implementation 2: The first message is carried in an Ethernet frame.

FIG. 6 is a schematic diagram of a third frame structure of a first message according to this application. As shown in FIG. 6, the Ethernet frame includes: a destination address (destination address), a source address (source address), a type/length (type/length), and a payload (data). A type/length field indicates the first message type. In this application, a new message type may be added to the message types already defined in the existing standard, so that the AP reports the energy-saving status of the STA to the access management device. In an example, the type/length field may be set to 0xAABB. In addition, a payload field is also defined, and the identifier of the first AP and the identifier of the first STA may be indicated by the payload field.

It should be noted that, if this application is applied to an optical access PON system, the first message may be in an OMCI message format, or may be carried in an Ethernet frame at an upper layer of the OMCI message. If this application is applied to a copper access scenario, the first message is carried in the Ethernet frame.

303: The access management device determines, based on the first message, that the first STA is in the sleep state, and allocates a first time-frequency resource to a STA in the wake-up state.

In this embodiment, the access management device may learn, based on the first message, that the first STA associated with the first AP enters the sleep state, so that the access management device may allocate the first time-frequency resource to another STA that is currently in the wake-up state.

It should be understood that, in a possible implementation, there is data to be transmitted between the first AP and the first STA before the first STA enters the sleep state, the first AP may report information related to the to-be-transmitted data to the access management device, and the access management device considers that the first STA can participate in scheduling. For example, the access management device may pre-allocate the first time-frequency resource to the first STA. The pre-allocation operation may be understood as a local scheduling decision of the access management device, and the first time-frequency resource is not necessarily actually pre-allocated to the first STA through scheduling. After the first STA switches to the sleep state, the access management device readjusts the scheduling decision, to allocate the first time-frequency resource to the another STA in the wake-up state. For another example, the access management device allocates a time-frequency resource to the first STA by using an actual scheduling operation, and after the first STA switches to the sleep state, the access management device temporarily does not allocate a time-frequency resource to the first STA.

It should be noted that, in an actual application, even if the first AP does not perform data exchange with the first STA or there is no data to be transmitted between the first AP and the first STA, the first AP may also obtain the energy-saving status information of the first STA and report the information to the access management device. In this case, the access management device does not allocate the time-frequency resource to the first STA. In other words, regardless of whether the first AP and the first STA currently need to perform data exchange, provided that the first STA enters the sleep state, the first AP notifies the access management device, and the access management device does not allocate the time-frequency resource to the first STA before the first STA wakes up again.

The following describes a manner of allocating the first time-frequency resource by the access management device with reference to several specific application scenarios.

Application scenario 1: The access management device allocates a time-frequency resource to a second STA associated with the first AP.

In this embodiment, the second STA associated with the first AP is in the wake-up state, and there is data to be transmitted between the first AP and the second STA. Because the first AP does not notify the access management device that the second STA enters the sleep state, the access management device determines that the second STA is in the wake-up state and allocates the time-frequency resource to the second STA. Specifically, the access management device sends a first scheduling message to the first AP, and the first AP performs data exchange with the second STA by using the first time-frequency resource indicated by the first scheduling message.

Application scenario 2: The access management device allocates a time-frequency resource to the second STA associated with a second AP.

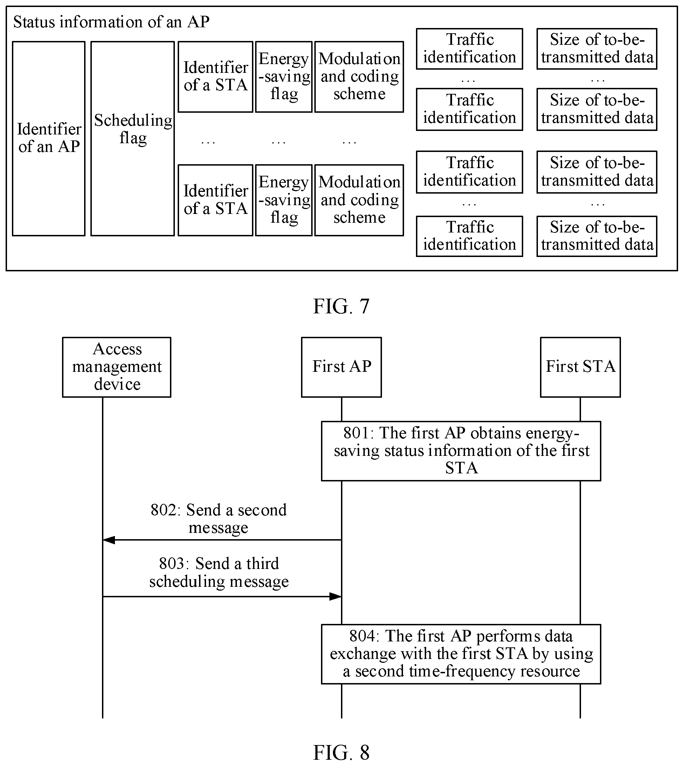

In this embodiment, when all STAs, including the first STA, that are associated with the first AP enter the sleep state, the first AP temporarily does not participate in the scheduling decision of the access management device. It should be understood that the access management device locally stores status information of all APs associated with the access management device. In an example, FIG. 7 is a schematic diagram of content of status information of an AP according to this application. As shown in FIG. 7, the status information of the AP includes: an identifier of the AP, a scheduling flag, an identifier of the STA, an energy-saving flag, a modulation and coding scheme (Modulation and Coding Strategy, MCS), a traffic identification (Traffic Identification, TID), and a size of to-be-transmitted data. The to-be-transmitted data includes uplink data and/or downlink data. The scheduling flag indicates whether the AP can participate in the scheduling decision of the access management device. For example, if the scheduling flag is 0, it indicates that the AP cannot participate in the scheduling decision of the access management device; and if the scheduling flag is 1, it indicates that the AP can participate in the scheduling decision of the access management device. The energy-saving flag indicates an energy-saving status of the STA associated with the AP. For example, if the energy-saving flag is 0, it indicates that the STA is in the wake-up state, or if the energy-saving flag is 1, it indicates that the STA is in the sleep state. The traffic identification indicates a type of each service transmitted between the AP and the STA. The access management device may determine, by comparing the status information of the APs, that the second STA associated with the second AP is in the wake-up state, and allocate the time-frequency resource to the second STA. Specifically, the access management device sends a first scheduling message to the second AP, and the second AP performs data exchange with the second STA by using the first time-frequency resource indicated by the first scheduling message.

In this embodiment of this application, the first AP may learn whether the first STA is in the wake-up state or the sleep state. If the first STA enters the sleep state from the wake-up state, the first AP sends a message to the access management device to notify that the first STA enters the sleep state. Further, the access management device performs time-frequency resource scheduling based on the message reported by the first AP, to allocate the time-frequency resource to the STA in the wake-up state. In this way, even if there is the data to be transmitted between the first AP and the first STA, the first AP does not occupy the time-frequency resource to exchange data with the first STA that enters the sleep state. This avoids a waste of the time-frequency resource.

It should be noted that, if the first STA associated with the first AP switches from the sleep state to the wake-up state again, the first AP also notifies the access management device, so that the access management device re-allocates a time-frequency resource to the first STA. The following provides descriptions by using specific embodiments.

FIG. 8 is a schematic diagram of a second embodiment of a time-frequency resource allocation method according to this application. In this example, the time-frequency resource allocation method includes the following steps.

801: A first AP obtains energy-saving status information of a first STA.

When an energy-saving status of the first STA changes, the first STA notifies the first AP, so that the first AP updates locally stored energy-saving status information of the first STA. In this embodiment, the energy-saving status information of the first STA is that the first STA enters a wake-up state. It should be understood that, for a specific implementation in which the first AP obtains the energy-saving status information of the first STA, refer to related descriptions in step 303 in the embodiment shown in FIG. 3, and details are not described herein again.

802: The first AP sends a second message to an access management device.

The second message sent by the first AP to the access management device indicates that the first STA associated with the first AP enters the wake-up state. It should be understood that, a message format of the second message in this embodiment is similar to that of the first message in the embodiment shown in FIG. 3, and a difference lies only in that indicated content is different. The second message includes a second message type, an identifier of the first AP, and an identifier of the first STA. For the format of the second message, refer to related descriptions of the format of the first message in the embodiment shown in FIG. 3. Details are not described herein again.

In some possible implementations, the second message may further include an MCS, a TID, and a size of data to be transmitted between the first AP and the first STA, so that the access management device allocates a time-frequency resource to the first STA more properly based on an actual requirement. It should be noted that if the second message uses the message format shown in FIG. 5, the MCS, the TID, and the size of the to-be-transmitted data are carried in a message content field; or if the second message uses the message format shown in FIG. 6, the MCS, the TID, and the size of the to-be-transmitted data are carried in a payload field.

803: The access management device sends a second scheduling message to the first AP.

The access management device updates locally stored status information of the first STA based on the second message reported by the first AP. FIG. 7 is used as an example. Because the first STA enters the wake-up state, the energy-saving flag being set to 0 indicates that the first STA is in the wake-up state, and the scheduling flag being set to 1 indicates that the first AP can participate in the scheduling decision of the access management device. Further, the access management device may allocate a second time-frequency resource to the first STA based on information such as the MCS, the TID, and the size of the to-be-transmitted data in the second message, and send the second scheduling message to the first AP, to notify the first AP of a current scheduling decision.

804: The first AP performs data exchange with the first STA by using the second time-frequency resource.

The first AP performs data exchange with the first STA by using the second time-frequency resource indicated by the second scheduling message.

The foregoing describes the time-frequency resource allocation method in embodiments of this application. The following describes an access management device and an AP in embodiments of this application.

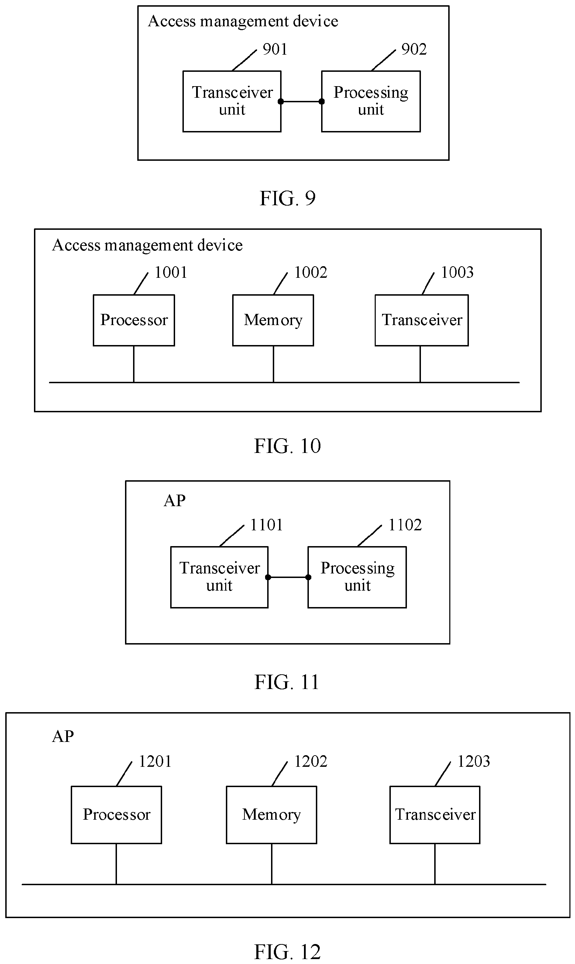

FIG. 9 is a schematic diagram of a structure of a possible access management device. As shown in FIG. 9, the access management device includes a transceiver unit 901 and a processing unit 902. Specifically, the transceiver unit 901 is configured to perform message receiving and sending operations in the embodiments shown in FIG. 3 and FIG. 8. The processing unit 902 is configured to perform operations other than message receiving and sending in the embodiments shown in FIG. 3 and FIG. 8.

FIG. 10 is a schematic diagram of a structure of another possible access management device. The access management device includes a processor 1001, a memory 1002, and a transceiver 1003. The processor 1001, the memory 1002, and the transceiver 1003 are connected to each other by using a line, and the memory 1002 is configured to store program instructions and data. The transceiver 1003 includes a transmitter and a receiver. Specifically, the transceiver 1003 is configured to perform message receiving and sending operations in the embodiments shown in FIG. 3 and FIG. 8. The processor 1001 is configured to perform operations other than message receiving and sending in the embodiments shown in FIG. 3 and FIG. 8. In a possible implementation, the processor 1001 may include the processing unit 902 shown in FIG. 9, and the transceiver 1003 may include the transceiver unit 901 shown in FIG. 9.

FIG. 11 is a schematic diagram of a structure of a possible AP. As shown in FIG. 11, the AP includes a transceiver unit 1101 and a processing unit 1102. Specifically, the transceiver unit 1101 is configured to perform message receiving and sending operations in the embodiments shown in FIG. 3 and FIG. 8. The processing unit 1102 is configured to perform operations other than message receiving and sending in the embodiments shown in FIG. 3 and FIG. 8.

FIG. 12 is a schematic diagram of a structure of another possible AP. The AP includes a processor 1201, a memory 1202, and a transceiver 1203. The processor 1201, the memory 1202, and the transceiver 1203 are connected to each other by using a line, and the memory 1202 is configured to store program instructions and data. The transceiver 1203 includes a transmitter and a receiver. Specifically, the transceiver 1203 is configured to perform message receiving and sending operations in the embodiments shown in FIG. 3 and FIG. 8. The processor 1201 is configured to perform operations other than message receiving and sending in the embodiments shown in FIG. 3 and FIG. 8. In a possible implementation, the processor 1201 may include the processing unit 1102 shown in FIG. 11, and the transceiver 1203 may include the transceiver unit 1101 shown in FIG. 11.

It should be noted that the processors shown in FIG. 10 and FIG. 12 may be a general-purpose central processing unit (Central Processing Unit, CPU), a microprocessor, an application-specific integrated circuit ASIC, or at least one integrated circuit, and is configured to execute a related program, to implement the technical solutions provided in embodiments of this application. The memories shown in FIG. 10 and FIG. 12 may store an operating system and another application program. When the technical solutions provided in embodiments of this application are implemented by using software or firmware, program code for implementing the technical solutions provided in embodiments of this application is stored in the memory, and is executed by the processor. In an embodiment, the processor may include the memory. In another embodiment, the processor and the memory are two independent structures.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

A person of ordinary skill in the art may understand that all or some of the steps in the foregoing embodiments may be implemented by hardware or a program instructing related hardware. The program may be stored in a computer-readable storage medium. The storage medium may be a read-only memory, a random access memory, or the like. Specifically, for example, the foregoing processing unit or processor may be a central processing unit, a general-purpose processor, a digital signal processor (DSP), an application-specific integrated circuit (ASIC), a field programmable gate array (FPGA) or another programmable logic device, a transistor logic device, a hardware component, or any combination thereof. Whether these functions are performed by hardware or software depends on particular applications and design constraints of the technical solutions. A person skilled in the art may use different methods to implement the described functions for each particular application, but it should not be considered that the implementation goes beyond the scope of this application.

When the software is used to implement the embodiments, all or some of the method steps described in the foregoing embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A time-frequency resource allocation method, comprising:
receiving, by an access management device, a first message sent by a first access point AP, wherein the first message indicates that a first STA associated with the first AP enters a sleep state; and
determining, by the access management device based on the first message, that the first STA is in the sleep state, and allocating a first time-frequency resource to a STA in a wake-up state.

2. The method according to claim 1, wherein a second STA associated with the first AP is in the wake-up state, and the allocating, by the access management device, a first time-frequency resource to a STA in a wake-up state comprises:
sending, by the access management device, a first scheduling message to the first AP, wherein the first scheduling message indicates the first AP to perform data exchange with the second STA in the wake-up state by using the first time-frequency resource.

3. The method according to claim 1, wherein the access management device is associated with a second AP, a second STA associated with the second AP is in the wake-up state, and the allocating, by the access management device, a first time-frequency resource to a STA in a wake-up state comprises:
sending, by the access management device, a first scheduling message to the second AP, wherein the first scheduling message indicates the second AP to perform data exchange with the second STA in the wake-up state by using the first time-frequency resource.

4. The method according to any one of claims 1 to 3, wherein the first message comprises a first message type, an identifier of the first AP, and an identifier of the first STA.

5. The method according to claim 4, wherein the first message is an optical network unit management and control interface OMCI message, the first message comprises a first message type field and a first message content field, the first message type field indicates the first message type, and the first message content field indicates the identifier of the first AP and the identifier of the first STA.

6. The method according to claim 4, wherein the first message is an Ethernet frame, the first message comprises a first type/length field and a first payload field, the first type/length field indicates the first message type, and the first payload field indicates the identifier of the first AP and the identifier of the first STA.

7. The method according to any one of claims 1 to 6, wherein the method further comprises:
receiving, by the access management device, a second message sent by the first AP, wherein the second message indicates that the first STA enters the wake-up state; and
determining, by the access management device based on the second message, that the first STA is in the wake-up state, and sending a second scheduling message to the first AP, wherein the second scheduling message indicates the first AP to perform data exchange with the first STA in the wake-up state by using a second time-frequency resource.

8. The method according to claim 7, wherein the second message comprises a size of data to be transmitted between the first AP and the first STA and a traffic identification TID.

9. The method according to any one of claims 1 to 8, wherein before the access management device receives the first message sent by the first AP, the first time-frequency resource is pre-allocated by the access management device to the first STA.

10. The method according to any one of claims 1 to 9, wherein the access management device is an optical gateway, and the first AP is an optical modem; or the access management device is an optical line terminal OLT, and the first AP is an optical network unit ONU.

11. The method according to claim 1, 2, 3, 4, 5, 7, 8, or 9, wherein the access management device is an access controller AC.

12. A time-frequency resource allocation method, comprising:
obtaining, by an access point AP, first status information of a first station STA associated with the AP, wherein the first status information comprises that the first STA enters a sleep state; and
sending, by the AP, a first message to an access management device, wherein the first message indicates that the first STA enters the sleep state, so that the access management device determines that the first STA is in the sleep state, and allocates a first time-frequency resource to a STA in a wake-up state.

13. The method according to claim 12, wherein a second STA associated with the AP is in the wake-up state, and the method further comprises:
receiving, by the AP, a first scheduling message sent by the access management device; and
performing, by the AP, data exchange with the second STA in the wake-up state by using the first time-frequency resource indicated by the first scheduling message.

14. The method according to claim 12 or 13, wherein the first message comprises a first message type, an identifier of the AP, and an identifier of the first STA.

15. The method according to claim 14, wherein the first message is an optical network unit management and control interface OMCI message, the first message comprises a first message type field and a first message content field, the first message type field indicates the first message type, and the first message content field indicates the identifier of the AP and the identifier of the first STA.

16. The method according to claim 14, wherein the first message is an Ethernet frame, the first message comprises a first type/length field and a first payload field, the first type/length field indicates the first message type, and the first payload field indicates the identifier of the AP and the identifier of the first STA.

17. The method according to any one of claims 12 to 16, wherein an updated first status information comprises that the first STA enters the wake-up state, and the method further comprises:
sending, by the AP, a second message to the access management device, wherein the second message indicates that the first STA enters the wake-up state;
receiving, by the AP, a second scheduling message sent by the access management device; and
performing, by the AP, data exchange with the first STA in the wake-up state by using a second time-frequency resource indicated by the second scheduling message.

18. The method according to claim 17, wherein the second message comprises a size of data to be transmitted between the AP and the first STA and a traffic identification TID.

19. The method according to any one of claims 12 to 18, wherein before the AP obtains the first status information of the first STA, the first time-frequency resource is pre-allocated by the access management device to the first STA.

20. The method according to any one of claims 12 to 19, wherein the access management device is an optical gateway, and the AP is an optical modem; or the access management device is an optical line terminal OLT, and the AP is an optical network unit ONU.

21. The method according to claim 12, 13, 14, 15, 17, 18, or 19, wherein the access management device is an access controller AC.

22. An access management device, comprising a transceiver unit and a processing unit, wherein
the transceiver unit is configured to receive a first message sent by a first access point AP, wherein the first message indicates that a first STA associated with the first AP enters a sleep state; and
the processing unit is configured to: determine, based on the first message, that the first STA is in the sleep state, and allocate a first time-frequency resource to a STA in a wake-up state.

23. The access management device according to claim 22, wherein a second STA associated with the first AP is in the wake-up state, and the processing unit is specifically configured to:
control the transceiver unit to send a first scheduling message to the first AP, wherein the first scheduling message indicates the first AP to perform data exchange with the second STA in the wake-up state by using the first time-frequency resource.

24. An access point AP, comprising a transceiver unit and a processing unit, wherein
the processing unit is configured to obtain first status information of a first station STA associated with the AP, wherein the first status information comprises that the first STA enters a sleep state; and
the transceiver unit is configured to send a first message to an access management device, wherein the first message indicates that the first STA enters the sleep state, so that the access management device determines that the first STA is in the sleep state, and allocates a first time-frequency resource to a STA in a wake-up state.

25. The AP according to claim 24, wherein a second STA associated with the AP is in the wake-up state; and the transceiver unit is specifically configured to receive a first scheduling message sent by the access management device; and
the processing unit is specifically configured to perform data exchange with the second STA in the wake-up state by using the first time-frequency resource indicated by the first scheduling message.
